# EUROPÄISCHE PATENTSCHRIFT

(11) **EP 3 725 140 B1**
(45) Veröffentlichungstag und Bekanntmachung des Hinweises auf die Patenterteilung: **28.12.2022**
(21) Anmeldenummer: 20168962.7
(22) Anmeldetag: 09.04.2020
(51) Int. Cl.: A01B 1/02

(54) **SCHAUFELSPATEN ZUM AUFNEHMEN, LOCKERN UND/ODER FORTSCHAFFEN VON MATERIALIEN**
SHOVEL SPADE FOR PICKING UP, LOOSENING AND/OR REMOVING MATERIALS
PELLE POUR RAMASSER, AMEUBLIR ET/OU ENLEVER DES MATÉRIAUX

(30) Priorität: 10.04.2019 DE 102019109510
(43) Veröffentlichungstag der Anmeldung: 21.10.2020
(73) Patentinhaber: TurfPro Maschinen und Motorgeräte GmbH, 20095 Hamburg (DE)
(72) Erfinder: Hainzl, Olaf, 22395 Hamburg (DE)
(74) Vertreter: Limbeck, Achim

(56) Entgegenhaltungen:
- CA-A1- 2 449 766
- CN-U- 206 100 798
- DE-A1-102014 015 918
- US-A- 2 102 133

## Beschreibung

### Technisches Gebiet

Die vorliegende Erfindung betrifft einen Schaufelspaten gemäß dem Oberbegriff des Patentanspruchs 1. Als Spatenschaufeln seien vorliegend jegliche Kombinationen aus Schaufeln und Spaten bezeichnet, die durch ihre Form und Konstruktion in besonderer Art und Weise geeignet ist, sowohl zum Graben als auch zum Schaufeln eingesetzt zu werden. Der Schaufelspaten ersetzt damit mindestens eines der handelsüblichen Geräte (Schaufel und Spaten), in Haushalten, Gärten, Baustellen, Friedhöfen, Grünanlagen etc.

Die vorliegende Erfindung lässt sich überall dort einsetzen, wo das Ladevolumen von Spatenschaufeln erhöht werden soll, wenn diese zum Schaufeln von Schüttgütern (wie zum Beispiel Mutterboden, Sand, Kies, Häcksel, Mulch, Torf, Laub, Zement, Beton etc.) eingesetzt werden, wie sie typischerweise im Bereich des Bauens, im Garten, im Garten- und Landschaftsbau, auf Friedhöfen etc. Verwendung finden.

### Stand der Technik

Es sind aus dem Stand der Technik Schaufeln und Spaten bekannt, die ein an einem Stil angeordnetes Blatt (Schaufel- oder Spatenblatt) zum Aufnehmen, Lockern und/oder Fortschaffen von (Locker-) Materialien (bspw. Schüttgut) umfassen. Nachteilig bei den bekannten Schaufeln und Spaten ist, dass deren Einsatz in der Regel dergestalt erfolgt, dass zum Graben vorrangig Spaten herangezogen werden, weil diese konstruktionsbedingt besser geeignet sind, Gräben oder Löcher zu graben, während Schaufeln genutzt werden, um lose und schüttfähige Materialien in oder aus Behältern hinein oder heraus zu schaufeln oder um Schüttgüter zu bewegen oder zu transportieren. Im Einsatz sind darüber hinaus in Deutschland auch vereinzelt bereits Spatenschaufeln, die sowohl die Eigenschaften von Spaten und Schaufeln vereinen. Aufgrund der relativ flachen Bauform von Spatenschaufeln ist deren Aufnahmevolumen beim Schaufeln loser, schüttfähiger und ungebundener Materialien begrenzt, so dass eine erhebliche Anzahl von Schaufelbewegungen nötig ist, um größere Mengen an Schüttgut zu bewegen.

Die Nachteile der bisherigen Lösung von Spaten und Schaufeln als separate Einzelwerkzeuge sind vielfältig: doppelte Anschaffungskosten, doppelte Instandhaltungskosten, doppelter Lagerplatzbedarf, limitierte Grabtiefe handelsüblicher Spaten, während Schaufeln ungeeignet sind zum Graben etc. Selbst beim Zurückgreifen auf die bisher wenig verbreiteten Spatenschaufeln liegt der Nachteil dieser Geräteform unter anderem in deren flachen Kanten, woraus - wie bereits beschrieben - ein geringes Ladevolumen resultiert. Damit ein Graben mit einer Spatenschaufel effektiv gestaltet werden kann, darf diese naturgemäß nicht zu wannenförmig ausgebildet sein und deren Schaufelspatenblatt nicht über zu hohe Seiten verfügen, da ansonsten zum Einbringen der Spatenschaufel in das Erdreich ein zu hoher, reibungsbedingter Widerstand überwinden werden müsste und dies überdies mit einem sehr hohen Kraftaufwand verbunden wäre.

Aus der Gebrauchsmusterschrift DE 80 03 530 U1 ist ein schaufelartiges Handgerät aus einem Blatt mit flacher Frontkante und etwa in der Blattachse angebrachtem Stiel bekannt, dessen Blatt durch Seitenwangen und eine Rückwand zu einer Mulde ergänzt ist, wobei die Höhe von Rückwand und/oder Seitenwangen etwa der halben Blattlänge entsprechen, was erforderlich sein soll, um ein ausreichendes Aufnahmevolumen für das Handgerät zu erzeugen.

Aus der Offenlegungsschrift DE 44 15 974 A1 ist darüber hinaus ebenfalls eine Schaufel bekannt, dessen Blatt mit Aufkantungen an den Seiten versehen ist.

Beiden vorgenannten Druckschriften ist gemein, dass die Aufkantungen irreversibel an der Schaufel bzw. dem schaufelartigen Handgerät angeordnet sind, was die Eignung als Spaten selbst verhindert und deren Verwendung für den jeweiligen Bedarfsfall dadurch deutlich einschränkt.

Aus der US 2 102 133 A ist ein Schaufelspatenblatt mit einem an einem Stil angeordneten Schaufelspatenblatt zum Aufnehmen, Lockern und/oder Fortschaffen von Materialien bekannt, das an seinen mindestens zwei Außenkanten Aufkantungsprofile umfasst, die an dem Schaufelspatenblatt reversibel anordbar sind und wobei die Aufkantungsprofile jeweils aus Mehrkantprofilen gebildet sind, die mindestens ein auf einer Auflagefläche an dem Schaufelspatenblatt aufliegendes Auflageteil sowie mindestens ein zum Auflagenteil winklig angeordnetes Aufkantungsteil umfasst.

Die CA 24 49 766 A1 zeigt ebenfalls eine Schaufel, die eine Klinge und einen Griff aufweist, wobei die Klinge erste und zweite Seitenkanten und erste und zweite Flügel aufweist, die sich von den jeweiligen Seitenkanten nach außen und oben erstrecken, wobei jeder der Flügel eine Vorderkante aufweist, die mit einer jeweiligen Schaufelseitenkante verschmilzt.

Die CN 206 100 798 U zeigt ebenfalls eine Schaufel, dessen Schaufelspatenblatt an seinen mindestens zwei Außenkanten Aufkantungsprofile umfasst.

Die DE 10 2014 015 918 A1 zeigt überdies eine Schaufel, die eine konische Grundfläche und seitliche Aufkantungen umfasst, die zu einem Auslass führen.

### Darstellung der Erfindung

Der vorliegenden Erfindung liegt daher die Aufgabe zugrunde, die konstruktionsbedingten Nachteile eines Schaufelspatens zu kompensieren und ferner einen Schaufelspaten zu schaffen, der im Bedarfsfall durch Erhöhung seines Ladevolumens noch multifunktioneller und effizienter zum Schaufeln eingesetzt werden kann, ohne dessen Eignung zum Einsatz als Spaten (und damit zum Graben) zu verringern.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Schaufelspatens sind in den abhängigen Unteransprüchen angegeben.

Erfindungsgemäß ist ein Schaufelspaten der eingangs genannten Art dadurch gekennzeichnet, dass die Aufkantungsprofile mindestens ein zum Auflagenteil winklig und ebenfalls zum Aufkantungsteil winklig angeordnetes weiteres Aufkantungsteil umfassen, das an einer an dem Schaufelspaten an seiner zum Stil gerichteten Seite vorgesehenen Aufkantung anliegt und/oder an dieser reversibel befestigt ist.

Die reversiblen, seitlichen Erhöhungsbleche erhöhen das Ladevolumen des Schaufelspatens deutlich und auf diese Art und Weise kann der Bediener mit dem (temporär) mit den seitlichen Erhöhungsblechen ausgerüsteten Schaufelspaten eine größere Menge Schüttgut aufnehmen und schaufeln als zuvor, wodurch eine erhebliche Zeitersparnis erreicht wird. Gleichzeitig werden die positiven Eigenschaften des Schaufelspatens (beider Massen gute Eignung sowohl zum Schaufeln als auch zum Graben) durch die Erfindung nur temporär und nicht unwiederbringlich verändert.

### Kurzbeschreibung der Zeichnungen

Weitere Ziele, Merkmale, Vorteile und Anwendungs-möglichkeiten des erfindungsgemäßen Schaufelspatens ergeben sich aus der nachfolgenden Beschreibung eines Ausführungsbeispiels anhand der Zeichnungen.

In den Zeichnungen zeigen
Fig. 1 den erfindungsgemäßen Schaufelspaten in einer perspektivischen Ansicht in einer besonders bevorzugten Ausführungsform;

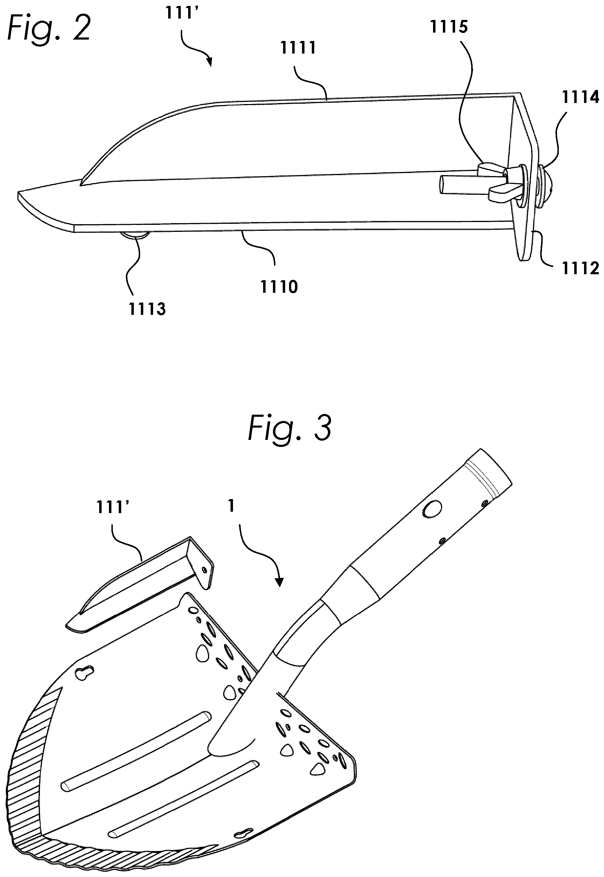

Fig. 2 das rechte seitliche Aufkantungsprofil und dessen Ausführung als speziell geformtes, mehrfach abgewinkeltes Mehrkantprofil mit angeschweißtem, pilzförmigen Befestigungsbolzen;
Fig. 3 das Schaufelspatenblatt mit einer seitlichen Blechaufkantung, welche in der Zeichnungsfigur noch nicht am Schaufelspatenblatt befestigt wurde;

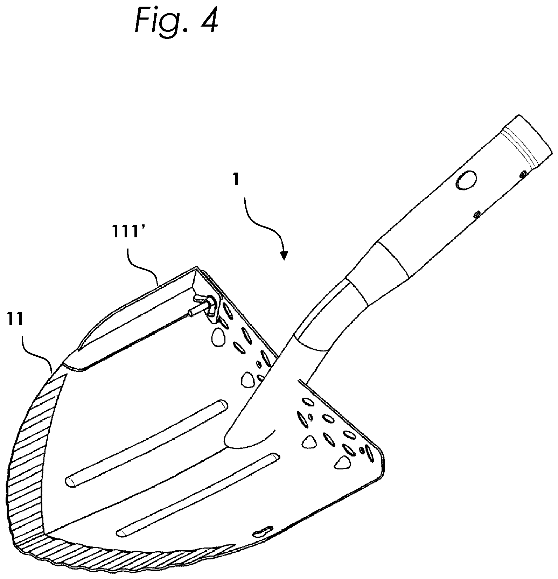

Fig. 4 ein fertig montiertes Aufkantungsprofil am Blatt.

### Ausführung der Erfindung

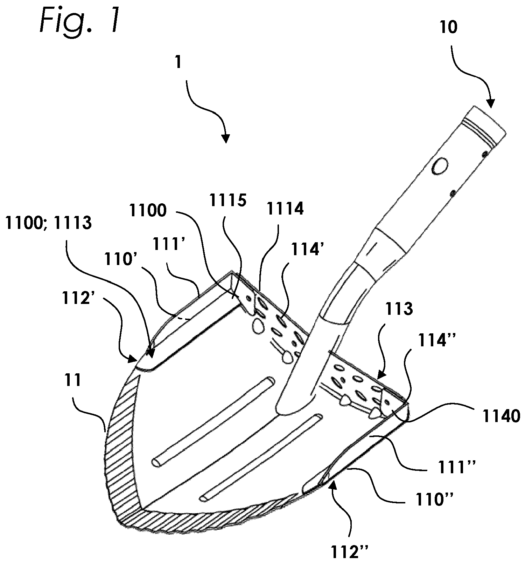

Wie aus Fig. 1 ersichtlich, umfasst der erfindungsgemäße Schaufelspaten 1 einen an einem Stil 10 angeordnetes Schaufelspatenblatt 11, das an zwei Außenkanten 110', 110" Aufkantungsprofile 111', 111" aufweist, die an dem Schaufelspatenblatt 11 reversibel anordbar sind, wobei die Aufkantungsprofile 111', 111" dem jeweiligen Kantenverlauf der Außenkanten 110', 110" vorzugsweise bereichsweise angepasst sind.

Die Aufkantungsprofile 111', 111" sind jeweils aus Mehrkantprofilen gebildet, die mindestens ein auf einer Auflagefläche 112', 112' an dem Schaufelspatenblatt 11 aufliegendes Auflageteil 1110 sowie mindestens ein zum Auflagenteil 1110 winklig angeordnetes Aufkantungsteil 1111 umfasst. Die Ausgestaltung der Winkel sowie die Größen und/oder Höhen der Aufkantungsprofile 111', 111" sind den entsprechenden Anforderung angepasst und/oder vorzugsweise anpassbar.

Wie aus den Figurenzeichnungen ersichtlich, umfassen die Aufkantungsprofile 111', 111" weiterhin mindestens ein zum Auflagenteil 1110 winklig und ebenfalls zum Aufkantungsteil 1111 winklig angeordnetes weiteres Aufkantungsteil 1112. Dabei ist vorgesehen, dass das weitere Aufkantungsteil 1112 an einer an dem Schaufelspaten 11 an seiner zum Stil 10 gerichteten Seite 113 vorgesehenen Aufkantung 114', 114" (bspw. eine Trittkante) anliegt und/oder an dieser reversibel befestigt ist.

Die Aufkantungsprofile 111', 111" sind vorteilhafterweise mittels Verbindungsmitteln 1110 der Aufkantungsprofile 111', 111" an entsprechend korrespondierenden Verbindungsmitteln 1100 der Außenkanten 110', 110" reversibel anordbar, besonders bevorzugt werkzeuglos.

Hierzu sind die Verbindungsmittel 1110 der Aufkantungsprofile 111', 111" ganz besonders vorteilhaft aus bolzenartigen Formteilen gebildet und die an den Außenkanten 110', 110" vorgesehenen Verbindungsmittel 1100 als Öffnungen ausgebildet, in die die Verbindungsmittel 1113 eingeschoben und - nach Arretierung - mithilfe einer Gewindeschraube sowie einer passenden Mutter 1114 (vorzugsweise Flügelmuttern) verschraubt werden.

Wie aus den Figurenzeichnungen 1 bis 5 ersichtlich, flachen die Aufkantungsprofile 111', 111" in Schubrichtung des Schaufelspatens 1 vorzugsweise ab, um somit den Widerstand der Aufkantungsprofile 111', 111" möglichst zu verringern und ein leichtes Eindrücken in das Erdreich zu ermöglichen.

### Liste der Bezugsziffern

- 1: Schaufelspaten
- 10: Stil
- 11: Schaufelspatenblatt
- 110', 110": Außenkanten am Schaufelspatenblatt
- 111', 111": Aufkantungsprofile am Schaufelspatenblatt
- 112', 112': Auflageflächen am Schaufelspatenblatt
- 113: hintere Seite am Schaufelspatenblatt
- 114', 114": Aufkantungen am Schaufelspatenblatt (Trittbleche)
- 1100: korrespondierende Verbindungsmittel (Öffnungen) an den Außenkanten am Schaufelspatenblatt
- 1110: Auflageteil der Aufkantungsprofile
- 1111: Aufkantungsteil der Aufkantungsprofile
- 1112: weiteres Aufkantungsteil der Aufkantungsprofile
- 1113: Verbindungsmittel an den Aufkantungsprofilen
- 1114: Gewindeschraube
- 1115: Flügelmutter
- 1140: Verbindungsmittel an den Aufkantungen

## Patentansprüche

1. Schaufelspaten (1) mit einem an einem Stil (10) angeordneten Schaufelspatenblatt (11) zum Aufnehmen, Lockern und/oder Fortschaffen von Materialien, wobei das Schaufelspatenblatt (11) an seinen mindestens zwei Außenkanten (110', 110") Aufkantungsprofile (111', 111") umfasst, die an dem Schaufelspatenblatt (11) reversibel anordbar sind und wobei die Aufkantungsprofile (111', 111") jeweils aus Mehrkantprofilen gebildet sind, die mindestens ein auf einer Auflagefläche (112', 112') an dem Schaufelspatenblatt (11) aufliegendes Auflageteil (1110) sowie mindestens ein zum Auflagenteil (1110) winklig angeordnetes Aufkantungsteil (1111) umfasst, **dadurch gekennzeichnet, dass**
die Aufkantungsprofile (111', 111") mindestens ein zum Auflagenteil (1110) winklig und ebenfalls zum Aufkantungsteil (1111) winklig angeordnetes weiteres Aufkantungsteil (1112) umfassen, das an einer an dem Schaufelspaten (11) an seiner zum Stil (10) gerichteten Seite (113) vorgesehenen Aufkantung (114', 114") anliegt und/oder an dieser reversibel befestigt ist.

2. Schaufelspaten (1) nach Anspruch 1,
**dadurch gekennzeichnet, dass**
die Aufkantungsprofile (111', 111") mittels Verbindungsmitteln (1113) der Aufkantungsprofile (111', 111") an entsprechend korrespondierenden Verbindungsmitteln (1100) der Außenkanten (110', 110") und/oder an entsprechend korrespondierenden Verbindungsmitteln (1140) der Aufkantungen (114', 114") reversibel anordbar sind.

3. Schaufelspaten (1) nach Anspruch 2,
**dadurch gekennzeichnet, dass**
die Verbindungsmittel (1113) der Aufkantungsprofile (111', 111") aus bolzenartigen Formteilen gebildet sind, wobei die an den Außenkanten (110', 110") vorgesehenen Verbindungsmittel (1100) als Öffnungen ausgebildet sind, in die die Verbindungsmittel (1113) eingeschoben und - nach Arretierung - mithilfe mindestens einem Verbindungsmittel (1140) an verschraubt werden.

4. Schaufelspaten (1) nach Anspruch 3,
**dadurch gekennzeichnet, dass**
die Mutter (1115) eine Flügelmutter ist.

5. Schaufelspaten (1) nach einem der vorangegangenen Ansprüche, **dadurch gekennzeichnet, dass**
die Aufkantungsprofile (111', 111") aus Blech gebildet sind.

6. Schaufelspaten (1) nach einem der vorangegangenen Ansprüche, **dadurch gekennzeichnet, dass**
die Aufkantungsprofile (111', 111") dem jeweiligen Kantenverlauf der Außenkanten (110', 110") zumindest bereichsweise angepasst sind.

7. Schaufelspaten (1) nach einem der vorangegangenen Ansprüche, **dadurch gekennzeichnet, dass**
die Aufkantungsprofile (111', 111") in Schubrichtung des Schaufelspatens (1) abflachen.

## Claims

1. Shovel spade (1) with a shovel spade blade (11) arranged on a style (10) for picking up, loosening and/or moving away materials, wherein the shovel spade blade (11) comprises upturned profiles (111', 111") on its at least two outer edges (110', 110"), which can be reversibly arranged on the shovel spade blade (11) and wherein the upturn profiles (111', 111") are each formed from polygonal profiles which comprise at least one support part (1110) resting on a support surface (112', 112') on the shovel spade blade (11) and at least one upturn part (1111) arranged at an angle to the support part (1110),
**characterised in that**
the upturn profiles (111', 111") comprise at least one further upturn part (1112) which is arranged at an angle to the support part (1110) and likewise at an angle to the upturn part (1111) and which bears against and/or is reversibly fastened to an upturn (114', 114") provided on the shovel spade (11) on its side (113) directed towards the style (10).

2. Shovel spade (1) according to claim 1,
**characterised in that**
the upturn profiles (111', 111") can be reversibly arranged by means of connecting means (1113) of the upturned profiles (111', 111") on correspondingly corresponding connecting means (1100) of the outer edges (110', 110") and/or on correspondingly corresponding connecting means (1140) of the upturned edges (114', 114").

3. Shovel spade (1) according to claim 2,
**characterised in that**
the connecting means (1113) of the upturned profiles (111', 111") are formed from bolt-like shaped parts, wherein the connecting means (1100) provided at the outer edges (110', 110") are formed as openings into which the connecting means (1113) are inserted and - after locking - are screwed on with the aid of at least one connecting means (1140).

4. Shovel spade (1) according to claim 3,
**characterised in that**
the nut (1115) is a wing nut.

5. Shovel spade (1) according to any of the preceding claims,
**characterised in that**
the upstand profiles (111', 111") are made of sheet metal.

6. Shovel spade (1) according to any of the preceding claims,
**characterised in that**
the upstand profiles (111', 111") are adapted to the respective edge course of the outer edges (110', 110") at least in some areas.

7. Shovel spade (1) according to any of the preceding claims,
**characterised in that**
the upstand profiles (111', 111") flatten in the direction of thrust of the shovel blade (1).

## Revendications

1. Bêche à godet (1) avec une lame de bêche à godet (11) disposée sur un manche (10) pour ramasser, ameublir et/ou évacuer des matériaux, la lame de bêche à godet (11) comprenant sur ses au moins deux bords extérieurs (110', 110") des profilés d'arête (111', 1 1 1"), qui peuvent être disposés de manière réversible sur la lame de bêche à godet (11) et dans lequel les profilés d'arête (111', 111") sont formés respectivement par des profilés polygonaux qui comprennent au moins une partie d'appui (1110) reposant sur une surface d'appui (112', 112') sur la lame de bêche à godet (11) ainsi qu'au moins une partie d'arête (1111) disposée en angle par rapport à la partie d'appui (1110),
**caractérisé en ce que**
les profilés de bordage (111', 111") comprennent au moins une autre partie de bordage (1112) disposée en angle par rapport à la partie d'appui (1110) et également en angle par rapport à la partie de bordage (1111), qui s'appuie sur un bordage (114', 114") prévu sur la bêche à palettes (11) sur son côté (113) orienté vers le style (10) et/ou est fixée de manière réversible sur celui-ci.

2. Bêche à godet (1) selon la revendication 1,
**caractérisé en ce que**
les profilés de bordage (111', 1 1 1") peuvent être disposés de manière réversible à l'aide de moyens de liaison (1113) des profilés de bordage (111', 111") sur des moyens de liaison (1100) correspondants des bords extérieurs (110', 110") et/ou sur des moyens de liaison (1140) correspondants des bordages (114', 114").

3. Bêche à godet (1) selon la revendication 2,
**caractérisé en ce que**
les moyens de liaison (1113) des profilés de bord (111', 111") sont formés de pièces moulées en forme de boulons, les moyens de liaison (1100) prévus sur les bords extérieurs (110', 110") étant conçus comme des ouvertures dans lesquelles les moyens de liaison (1113) sont insérés et - après blocage - vissés à l'aide d'au moins un moyen de liaison (1140).

4. Bêche à godet (1) selon la revendication 3,
**caractérisé en ce que**
l'écrou (1115) est un écrou à oreilles.

5. Bêche à godet (1) selon l'une des revendications précédentes,
**caractérisé en ce que**
les profilés de bord (111', 111") sont formés de tôle.

6. Bêche à godet (1) selon l'une des revendications précédentes,
**caractérisé en ce que**
les profilés de bordage (111', 11 1") sont adaptés au moins par zones au tracé respectif des bords extérieurs (110', 110").

7. Bêche à godet (1) selon l'une des revendications précédentes,
**caractérisé en ce que**
les profilés d'arête (111', 111") s'aplatissent dans la direction de poussée de la spatule (1).
